# EUROPEAN PATENT APPLICATION

(11) **EP 1 099 913 A2**
(43) Date of publication of application: **16.05.2001**
(21) Application number: 00830511.2
(22) Date of filing: 19.07.2000
(51) Int. Cl.: F24F 13/02

(54) **Bendable sandwich panel**

(30) Priority: 11.11.1999 IT CS990008 U
(71) Applicant: Euro.Pan. S.r.l., 87050 Figline Vegliaturo, Cosenza (IT)
(72) Inventor: Jordi, Soler Aguilar, 17171 Amer (Girona) (ES)

(57) **Abstract**

The new sandwich panel has an innovated form. The entire panel has parallel and symmetrical (non symmetrical) groovings which are present on one or both external sides. These groovings can be longitudinal groovings, groovings that are perpendicular to the length of the panel and combination of groovings mentioned before. These groovings and combination of groovings give the panel great flexibility so that it can fold easily and take on various curved or straight forms depending on the specific use.

## Description

At present sandwich panels are used for air conditioning shafts TAB. I Fig. (1); they are made internally of polyurethane foam (PIR/PUR) and externally of two protective sheets of aluminium, iron sheet or paper. The panel dimensions vary in thickness from 20mm/40mm, the width is 1200mm, the length varies from 1200mm/4000mm and the sides are cut at a 90° angle.

In order to fulfil specific needs, these panels must be moulded by special manual machines TAB. I Fig. (2), which are used to apply pressure directly to one side of the sandwich panel. By applying direct pressure one can stamp a grooving or a series of groovings, but these will not be precise in depth, distance and consistency TAB. I Fig. (3).

For the model which is to be patented see TABLE II Fig. (4) et seq. The new sandwich panel has an innovated form.

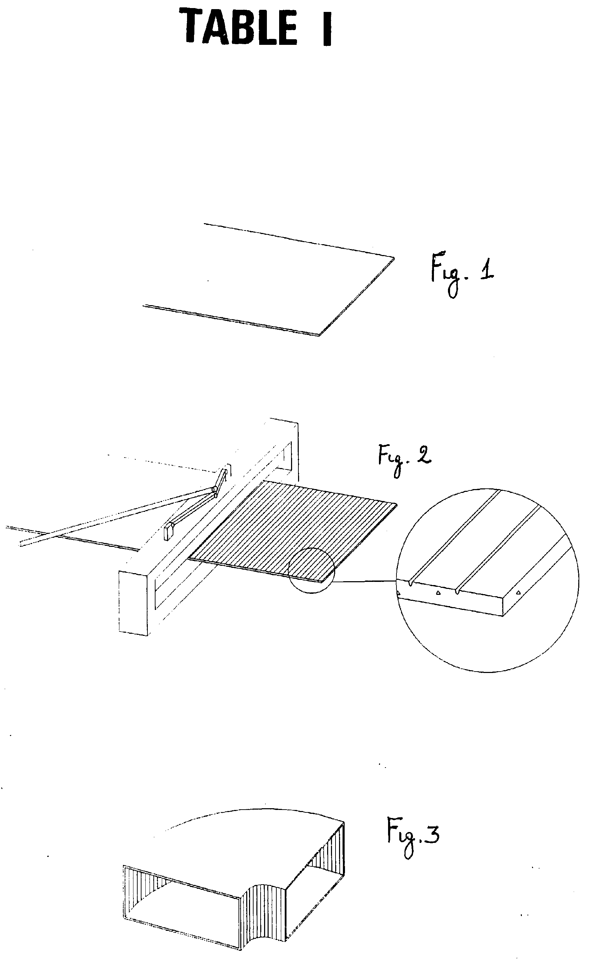

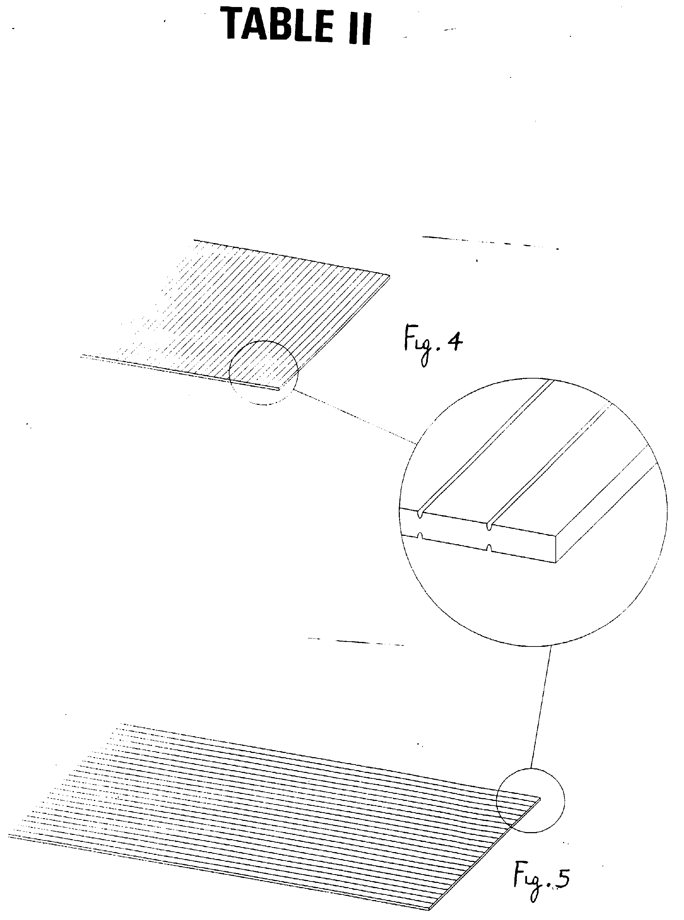

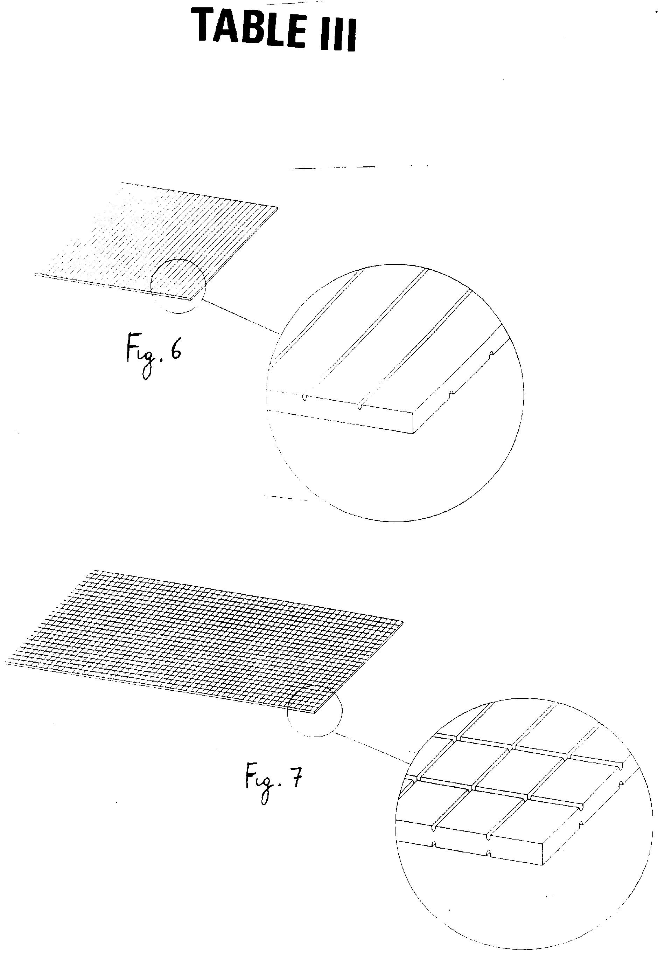

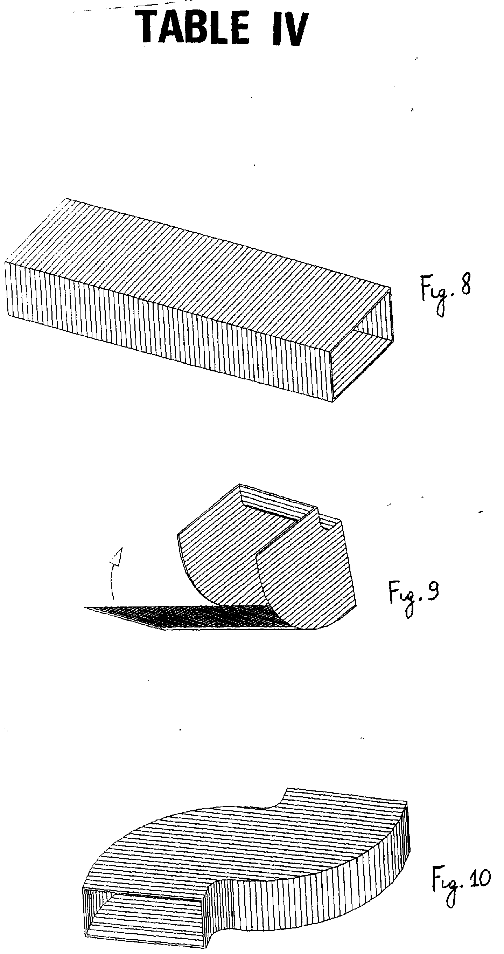

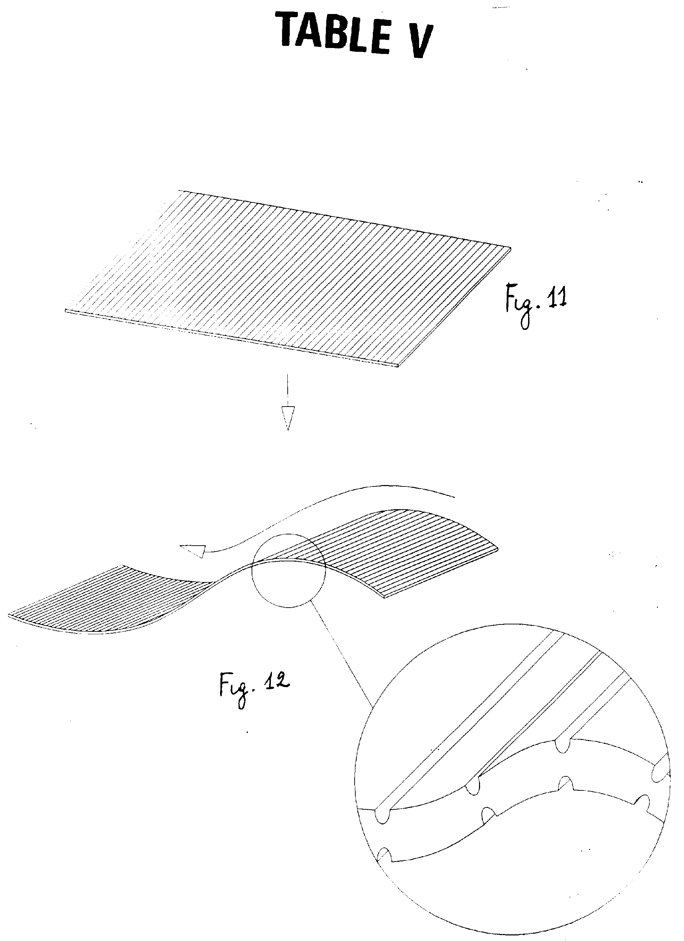

The entire panel has parallel and symmetrical (non symmetrical) groovings which are present on one or both external sides, having the same depth and distance. These groovings can be :
1) longitudinal groovings TAB. II Fig. (5).
2) Groovings that are perpendicular to the length of the panel TAB. II Fig (4) of the drawings.
3) A combination of the groovings mentioned in points 1 & 2 on one or both external sides, example TAB. III Fig. 6 & 7.

The above groovings and combination of groovings give the new panel great flexibility so that it can fold easily and take on various curved or straight forms depending on the specific use TAB. IV Fig. 8,9 & 10 and TAB. V Fig. 11 & 12.

## Claims

1. The sandwich panel, made internally of polyurethane foam and externally of two protective sheets of aluminium, has a particular form. This unique form allows the panel to be completely flexible and adaptable to different shapes.
This sandwich panel (Figures 4,5,6 & 7) which has groovings or a combination of groovings on one or both sides, is bendable, flexible and adaptable to various forms.

2. The sandwich panel as claimed in claim 1 is characterized by the fact that the sides can be cut at a 90° or 45° angle.

3. The sandwich panel as claimed in claim 1 to 2 and its external sides can be made of: metals (example aluminium, iron sheets, copper), paper, plastic, wood, combination of these materials.

4. The sandwich panel as claimed in claim 1 to 3 internally can be made of: plastic material or petroleum based products (example polyurethane foam PIR/PUR), mineral fibres (example fibreglass), organic material or metallic compound.

5. The sandwich panel as claimed in claim 1 to 4, characterized by the groovings in one or both external sides of the panel can be: in width between 1mm/200mm, in depth between 0,5mm/200mm, between 1mm/200mm apart.

6. In the sandwich panel as claimed in claim 1 to 5, the width, the length and the thickness of the sandwich panel can vary.

7. The sandwich panel as claimed in claim 1 to 6, can be used for air conditioning shafts and all other possible applications.
